# EUROPÄISCHE PATENTSCHRIFT

(11) **EP 2 703 686 B1**
(45) Veröffentlichungstag und Bekanntmachung des Hinweises auf die Patenterteilung: **14.02.2018**
(21) Anmeldenummer: 13004217.9
(22) Anmeldetag: 27.08.2013
(51) Int. Cl.: F16F 9/53, B62K 25/08, F16F 9/18

(54) **Federgabel, insbesondere für Fahrräder**
Suspension fork, in particular for bicycles
Fourche suspendue, en particulier pour vélos

(30) Priorität: 28.08.2012 DE 102012016946
(43) Veröffentlichungstag der Anmeldung: 05.03.2014
(73) Patentinhaber: DT Swiss AG, 2504 Biel (CH)
(72) Erfinder: Walthert, Martin, 3270 Aarberg (CH); Battlogg, Stefan, 6771 St. Anton (AT); Pösel, Jürgen, 6700 Bludenz (AT); Kieber, Michael, 6780 Schruns (AT)
(74) Vertreter: BSB Intellectual Property Law

(56) Entgegenhaltungen:
- EP-A1- 1 394 439
- EP-A1- 1 908 985
- EP-A2- 0 261 427

## Beschreibung

Die vorliegende Erfindung betrifft eine Federgabel für Fahrrad. Eine solche Federgabel umfasst ein Steuerrohr und wenigstens ein damit verbundenes Rohrsystem, welches ein Standrohr und ein relativ dazu bewegliches und insbesondere teleskopierbares Tauchrohr umfasst. Neben dem Rohrsystem ist ein Radaufnahmeraum vorgesehen. Wenn die Federgabel, wie oftmals üblich, zwei parallel benachbarte Rohrsysteme aufweist, befindet sich der Radaufnahmeraum zwischen den Rohrsystemen.

Im Stand der Technik sind verschiedene Federgabeln bekannt geworden. Oftmals ist in einem Standrohr der Federgabel ein Dämpfersystem vorgesehen, während ein Federsystem in dem anderen Standrohr untergebracht ist. Möglich ist es aber auch, dass in dem Federsystem auf einer Seite sowohl ein Dämpfersystem als auch ein Federsystem vorhanden sind.

Als Dämpfungsfluid wird meist ein Dämpfungsmedium auf Ölbasis eingesetzt, welches zur Dämpfung durch einen oder mehrere Dämpfungsspalte durchtritt. Aufgrund der unterschiedlichen Dämpfungskanäle und der verschiedenen Dämpfungsventile sind Federgabeln meist sehr komplex aufgebaut. Ein besonders Problem bei Federgabeln für muskelbetriebene Fahrzeuge und insbesondere Fahrräder ist das Bauvolumen. Ein weiterer wichtiger Faktor ist das Gewicht, welches insbesondere bei sportlichen Fahrrädern und erst recht bei Federgabeln für den Wettbewerb und für den anspruchsvollen Amateurbereich von besonderer Bedeutung ist. Weiterhin ist es vorteilhaft, wenn wenigstens einzelne Teile der Federgabel solche Abmessungen aufweisen, dass sie an anderen Federgabeln benutzt werden können. Sicher einzuhalten sind auf jeden Fall die Einbaumaße. Ein weiteres wichtiges Kriterium ist der mögliche Federweg.

Bei Federgabeln mit Öl als Dämpfungsfluid werden meist über eine Vielzahl von mechanisch einstellbaren Ventilen die Dämpfung in der Druckstufe und die Dämpfung in der Zugstufe separat eingestellt. Meist werden zudem noch unterschiedliche Strömungswege für die Low-Speed-Dämpfung und für die High-Speed-Dämpfung vorgesehen. Zusätzlich können noch Blow-Off-Ventile vorgesehen sein, die bei besonders starken Stößen öffnen, um zu große Belastungen zu vermeiden. Derartige bekannte Federgabeln funktionieren zuverlässig, sind aber kompliziert im Aufbau und weisen eine Vielzahl von Einstellmechanismen auf, sodass es schwierig sein kann, die optimalen Einstellungen zu finden. Einfacher aufgebaut können Federgabeln werden, bei denen beispielsweise magnetorheologische oder elektrorheologische Fluide als Dämpfungsmedium eingesetzt werden, da dort das durch einen Dämpfungskanal strömende Dämpfungsfluid einem entsprechend einstellbaren magnetischen oder elektrischen Feld ausgesetzt werden kann, womit die gewünschte Dämpfung einstellbar und nach Bedarf unterschiedlich steuerbar ist.

Mit der EP 1 908 985 A1 ist ein Dämpfer für Vorrichtungen wie Automobile und andere Fahrzeuge, Treppenlifte und Rudermaschinen bekannt geworden, bei denen das Gewicht keine besondere Rolle spielt. Der bekannte Dämpfer weist einen Kreislauf eines magnetorheologischen Fluids auf, wobei das MRF-Ventil durch Einwegventile bedingt immer in der gleichen Richtung durchströmt wird. Ein solcher bekannter Dämpfer funktioniert grundsätzlich, weist aber ein relativ hohes Gewicht auf.

Die EP 1 394 439 A1 offenbart ein Stoßdämpfungssystem für Zweiräder mit einer elektrorheologischen und/oder magnetorheologischen Flüssigkeit, wobei ein steuerbares Ventil durch die elektrorheologische und/oder magnetorheologische Flüssigkeit durchströmt wird und zur Einstellung einer gewünschten Dämpfung entsprechend angesteuert wird. Die Beeinflussung von elektrorheologischen Flüssigkeiten erfordert hohe Spannungen, sodass ein Dämpfer nach dieser Druckschrift im Falle eines Sturzes gewisse Gefahrenpotenziale bietet. Außerdem werden zur Ansteuerung relativ große metallische Flächen benötigt, die das Gewicht erhöhen.

Mit der EP 0 261 427 A2 ist ein Zweirohr-Stossdämpfer bekannt, der einen stets seine Richtung beibehaltenden Flüssigkeits-Umlauf hat und der mit einer elektrorheologischen Flüssigkeit betriebenwird. Dabei wird aber aufgrund der erforderlichen großen Scherflächen und metallischen Materialien ebenfalls ein relatives hohes Gesamtgewicht erreicht, was für den Einsatz bei sportlichen Fahrrädern nachteilig ist.

Es ist deshalb die Aufgabe der vorliegenden Erfindung eine einfach aufgebaute und nach Bedarf unterschiedlich steuerbare Federgabel zur Verfügung zu stellen, welche bei einem geringen Gewicht wenigstens einige der oben angeführten Anforderungen erfüllt.

Diese Aufgabe wird gelöst durch eine Federgabel mit den Merkmalen des Anspruchs 1. Bevorzugte Weiterbildungen der Erfindung sind Gegenstand der Unteransprüche. Weitere Vorteile und Merkmale der Erfindung ergeben sich aus dem Ausführungsbeispiel und der allgemeinen Beschreibung.

Eine erfindungsgemäße Federgabel ist für ein wenigstens teilweise muskelbetriebenes Fahrzeug und insbesondere ein Fahrrad vorgesehen. Die Federgabel umfasst ein Steuerrohr und wenigstens ein damit verbundenes Rohrsystem. Das Rohrsystem weist ein Standrohr und ein relativ dazu bewegliches Tauchrohr auf. Insbesondere sind das Standrohr und das Tauchrohr teleskopierbar ausgeführt. Neben dem Rohrsystem ist ein Radaufnahmeraum vorgesehen. Wenn die Federgabel zwei Rohrsysteme umfasst, ist der Radaufnahmeraum zwischen den Rohrsystemen vorgesehen.

Innerhalb des Rohrsystems ist eine Dämpfereinrichtung mit einem Dämpfungsmedium vorgesehen. Die Dämpfereinrichtung verfügt über eine Dämpferkammer und ein Drosselventil. Die Dämpferkammer ist durch einen beweglichen Kolben in eine erste Kammer und eine zweite Kammer geteilt. Der Kolben ist mit einer Kolbenstange verbunden. Die erste Kammer ist über einen Rückströmkanal, das Drosselventil und einen Verbindungskanal mit der zweiten Kammer verbunden. Als Dämpfungsmedium ist ein magnetorheologisches Fluid vorgesehen. Das Drosselventil ist steuerbar. Es ist wenigstens eine Felderzeugungseinrichtung zur Erzeugung eines einstellbaren Magnetfeldes in einem Dämpfungskanal des Drosselventils vorgesehen. Weiterhin dient eine Steuereinrichtung zur Steuerung.

Für das Dämpfungsmedium ist wenigstens im Wesentlichen ein Einwegkreislauf vorgesehen. In dem Einwegkreislauf sind wenigstens zwei Einwegventile vorgesehen. Sowohl beim Eintauchen der Kolbenstange in die Dämpferkammer hinein als auch beim Ausfahren bzw. Austauchen der Kolbenstange aus der Dämpferkammer heraus strömt das Dämpfungsmedium in der gleichen Umlaufrichtung um. Dabei ist ein erstes Einwegventil an dem Kolben angeordnet, welches eine Strömung und insbesondere nur eine Strömung des Dämpfungsmediums von der zweiten Kammer in die erste Kammer erlaubt. An dem Verbindungskanal ist ein zweites Einwegventil angeordnet, welches eine Strömung und insbesondere nur eine Strömung des Dämpfungsmediums von dem Verbindungskanal in die zweite Kammer erlaubt.

Damit ist sowohl das Eintauchen der Kolbenstange in die Dämpferkammer hinein als auch das Ausfahren bzw. Austauchen der Kolbenstange aus der Dämpferkammer heraus mit dem steuerbaren Drosselventil gezielt und bei Bedarf auch unterschiedlich einstellbar.

Es ist eine Einsatzeinrichtung zwischen dem Rohrsystem und der Dämpferkammer vorgesehen, wobei der Rückströmkanal wenigstens abschnittsweise an der Einsatzeinrichtung vorgesehen ist und vorzugsweise den Strömungsquerschnitt des Rückströmkanals begrenzt.

Eine mittlere Dichte der Einsatzeinrichtung zwischen dem Rohrsystem und der Dämpferkammer ist kleiner als eine mittlere Dichte des Dämpfungsmediums.

Vorzugsweise ist das Drosselventil axial benachbart zu der Dämpferkammer angeordnet. Der axiale Abstand ist insbesondere kleiner als die halbe Länge der Dämpferkammer.

Die erfindungsgemäße Federgabel hat viele Vorteile. Ein erheblicher Vorteil der erfindungsgemäßen einfach steuerbaren Federgabel besteht in dem einfachen Aufbau, der sich durch den in dem Rohrsystem vorgesehenen Einwegkreislauf ergibt. Das Dämpfungsmedium strömt beim Einfedern, wenn der Kolben weiter in die Dämpferkammer eintaucht, von der zweiten Kammer durch das Einwegventil in dem Kolben in die erste Kammer hinein. Durch den Rückströmkanal gelangt das Dämpfungsmedium über das Drosselventil gegebenenfalls wieder in die zweite Kammer hinein. Die Dämpfungskraft kann durch unterschiedlich starke Magnetfelder einfach eingestellt werden. Ein zusätzliches Blow-Off-Ventil ist nicht nötig, da durch die Eigenschaften magnetorheologischer Fluide die Verkettung zwischen den einzelnen Partikeln reversibel aufbricht, wenn eine Grenzbelastung überschritten wird.

Die an dem Kolben bzw. an dem Verbindungskanal angeordneten Einwegventile können nicht nur außen an den jeweiligen Körpern vorgesehen sein, sondern auch in einem Abstand davon angeordnet sein, sofern sie unmittelbar damit verbunden sind. Der Begriff "an" umfasst im Sinne der vorliegenden Erfindung auch den Begriff "in", sodass die Einwegventile auch in dem Kolben bzw. in dem Verbindungskanal vorgesehen sein können.

Vorzugsweise ist eine Ausgleichskammer mit einem insbesondere vorgespannten Ausgleichsvolumen vorgesehen. Das Ausgleichsvolumen ist mit dem Drosselventil und der zweiten Kammer verbunden. Das Ausgleichsvolumen ist insbesondere über den Verbindungskanal mit der zweiten Kammer verbunden. Durch insbesondere das erste Umschaltventil ist es möglich, die Ausgleichskammer und das Ausgleichsvolumen immer in den Niederdruckbereich, d. h. hinter das oder die Drosselventile zu schalten. Dadurch kann auch bei hoher Dämpfung ein steifes System erhalten werden, welches nicht in das Ausgleichsvolumen arbeitet. Zudem bewirkt das Ausgleichsvolumen so keine Ausfahrkraft auf den Kolben, was das Ansprechverhalten wesentlich verbessert.

Eine solche Ausgestaltung hat erhebliche Vorteile. Sowohl beim Einfedern als auch beim Ausfedern fließt wenigstens ein Teil des Dämpfungsmediums durch das Drosselventil durch, sofern keine durchgehende Kolbenstange eingesetzt wird. Bei einer nichtdurchgehenden Kolbenstange tritt beim Einfedern der Kolben weiter in die Dämpferkammer ein, sodass das Dämpfungsmedium durch das erste Einwegventil in dem Kolben in die erste Dämpferkammer übertreten muss. Der Weg aus der zweiten Dämpferkammer nach außen über das zweite Einwegventil ist verschlossen, da dieses nur das Einströmen des Dämpfungsmediums durch den Verbindungskanal in die zweite Dämpferkammer hinein erlaubt. In Gegenrichtung sperrt das Einwegventil.

Beim Eintauchen verdrängt der Kolben ein Volumen, welches proportional zu seiner Querschnittfläche ist. In der ersten Federkammer wird allerdings nur ein Volumen frei, welches proportional zur Querschnittsfläche des Kolbens abzüglich der Querschnittsfläche der Kolbenstange ist. Deshalb muss beim Eintauchen des Kolbens ein Teil des Dämpfungsmediums durch den Rückströmkanal zu dem Drosselventil strömen. Dort findet eine entsprechende Drosselung statt. Dieser Teil des Dämpfungsmediums tritt anschließend in die Ausgleichskammer ein.

Beim Ausfedern tritt die Kolbenstange aus der Dämpferkammer aus und es muss in der zweiten Dämpferkammer ein Volumen des Dämpfungsmediums nachströmen, welches proportional zu der Querschnittsfläche des Dämpferkolbens ist. Da das erste Einwegventil in dem Kolben nur eine Strömung des Dämpfungsfluids von der zweiten Dämpferkammer zu der ersten Dämpferkammer erlaubt und in Gegenrichtung sperrt, muss das Dämpfungsmedium über den Verbindungskanal durch das nun öffnende zweite Einwegventil in die zweite Dämpferkammer eintreten. Gleichzeitig tritt aus der ersten Dämpferkammer das verdrängte Dämpfungsmedium aus, welches über den Rückströmkanal zu der Drosseleinrichtung gelangt. Da in der zweiten Dämpferkammer mehr Volumen benötigt als in der ersten Dämpferkammer verdrängt wird, muss ein dem Querschnitt der Kolbenstangen entsprechender Anteil aus der Ausgleichskammer abgesaugt werden. Damit liegen sowohl in dem Rückströmkanal als auch in dem Verbindungskanal sowohl beim Einfedern als auch beim Ausfedern Strömungen in der gleichen Umlaufrichtung vor.

Das ist vorteilhaft, da über ein einziges steuerbares Drosselventil sowohl die Zugstufe als auch die Druckstufe gezielt und auch unterschiedlich gedämpft werden können. Das erleichtert den Aufbau einer solchen Federgabel erheblich. Es kann auch Gewicht eingespart werden und das stetige Strömen führt zum guten Durchmischen der magnetorheologischen Flüssigkeit.

Vorzugsweise ist die Ausgleichskammer axial beabstandet von dem Kolben angeordnet ist. Besonders bevorzugt ist die Ausgleichskammer axial benachbart zu der Dämpferkammer und vorteilhafterweise vorzugsweise axial neben der zweiten Kammer angeordnet.

In bevorzugten Ausgestaltungen ist es möglich, dass das Drosselventil über ein erstes Rückschlagventil mit der Ausgleichskammer verbunden ist. Dabei erlaubt das erste Rückschlagventil nur eine Strömung des Dämpfungsmediums von dem Drosselventil in die Ausgleichskammer hinein.

Vorzugsweise ist die Ausgleichskammer über ein zweites Rückschlagventil mit der zweiten Kammer verbunden. Dabei erlaubt das zweite Rückschlagventil nur eine Strömung des Dämpfungsmediums von der Ausgleichskammer in die zweite Kammer hinein.

Besonders bevorzugt ist wenigstens eines der Rückschlagventile einstellbar, um einen einstellbaren Strömungswiderstand in der Druckstufe und/oder der Zugstufe zu ermöglichen. Bei einer solchen Ausgestaltung ist es möglich, dass die Ausgleichskammer über zwei separate Ausgleichskanäle mit dem Verbindungskanal verbunden ist. Der eine Ausgleichskanal ist mit dem ersten Rückschlagventil versehen, während der zweite Ausgleichskanal mit dem zweiten Rückschlagventil ausgerüstet ist.

In diesen Ausgestaltungen ist es insbesondere möglich, dass die Rückschlagventile von außerhalb der Federgabel einstellbar sind, um beispielsweise bei mechanischen Rückschlagventilen die Kennlinie zu verändern. Dann ist das Rückschlagventil als einstellbares Drosselventil mit Rückschlagvorrichtung ausgebildet. Wird bei einer solchen Ausgestaltung ein mechanisches Drosselventil eingesetzt, so wird mit dem Drosselventil beispielsweise die Grundkennlinie eingestellt, während über die beiden einstellbaren Rückschlagventile beispielsweise die Grundkennlinie an die gewünschte Kennlinie im Zugstufenfall und die gewünschte Kennlinie im Druckstufenfall angepasst wird.

Das Dämpfungsmedium umfasst wenigstens ein magnetorheologisches Fluid und insbesondere ist das Dämpfungsmedium als magnetorheologisches Fluid (MRF) ausgebildet. Das Drosselventil ist vorzugsweise steuerbar ausgeführt und umfasst wenigstens eine Felderzeugungseinrichtung zur Erzeugung eines Magnetfeldes in wenigstens einem Dämpfungskanal des Drosselventils. Dabei Drosselventil ist steuerbar ausgeführt ist und erzeugt ein entsprechend gesteuertes Magnetfeld in dem Dämpfungskanal des wenigstens eines Drosselventils. Weiterhin dient vorzugsweise eine Steuereinrichtung zur Steuerung. Grundsätzlich sind neben magnetorheologischen Fluiden auch elektrorheologische Fluide (ERF) bekannt geworden. Für die vorgesehenen Einsatzzwecke eignet sich ein MRF aber erheblich besser, da ERF hohe Spannungen zur Steuerung benötigen. Ein weiterer Nachteil von ERF ist, dass sich keine dauerhaften Felder induzieren lassen. Bei MRF ist es hingegen möglich, mit Permanentmagneten stromlos bestimmte Drosselzustände einzustellen oder die Remanenz von Materialien auszunutzen. Dabei wird die Magnetfeldstärke eines Permanentmagneten durch beispielsweise einen kurzen magnetischen Impuls dauerhaft eingestellt. Die eingestellte Magnetfeldstärke bleibt auch lange nach dem magnetischen Impuls erhalten, ohne dass weiterhin äußere Energie benötigt wird. Diese Möglichkeiten gibt es bei ERF nicht.

Eine solche Ausgestaltung ist besonders vorteilhaft, da magnetorheologische Dämpfungsmedien schnell auf angelegte Magnetfelder reagieren. Dabei ist es möglich, dass ein Dauermagnet als Felderzeugungseinrichtung eingesetzt wird. Ein solcher Dauermagnet kann beispielsweise mechanisch in seiner Lage verändert werden, um die in dem Dämpfungskanal wirkende Dämpfungskraft verändern zu können. Möglich ist es auch, dass ein Dauermagnet eingesetzt wird, dessen Magnetfeld durch das Magnetfeld einer elektrischen Spule je nach den gerade gewünschten Anforderungen überlagert wird. So kann durch den Dauermagneten eine ständig wirkende Dämpfung eingestellt werden, die beispielsweise bei Bedarf durch das Magnetfeld der elektrischen Spule abgeschwächt oder verstärkt wird.

Möglich ist es auch, dass die Felderzeugungseinrichtung einen hier sogenannten Remanenzmagneten umfasst, dessen Magnetfeldstärke periodisch bei Bedarf oder in unregelmäßigen Abständen durch einen magnetischen Impuls einer zugeordneten elektrischen Spule eingestellt wird. Ein solcher Remanenzmagnet wird durch den magnetischen Impuls von beispielsweise nur einigen Millisekunden Dauer dauerhaft auf eine bestimmte Magnetfeldstärke eingestellt. Wenn die magnetische Magnetfeldstärke des Remanenzmagneten wieder reduziert werden soll, kann dies z. B. über ein zeitlich sich abschwächendes Wechselfeld erfolgen. Eine Lösung für den grundsätzlichen Aufbau eines Drosselventils mit einem Remanenzmagneten kann insbesondere der EP 2 339 203 A2 entnommen werden. Ein bevorzugter Aufbau eines mit Remanenz arbeitenden Ventils orientiert sich vorzugsweise an diesem Dokument.

Mit einem elektrisch einstellbaren Drosselventil und einem magnetorheologisches Fluid wird eine besonders flexible Steuerung der Dämpfungseigenschaften ermöglicht. Unabhängig von mechanischen Einstellmöglichkeiten eröffnet ein solches steuerbares Drosselventil die Möglichkeit der Steuerung in Echtzeit, bei der auf einen Stoß in Echtzeit reagiert wird, noch während der Stoß stärker wird und bevor er sein Maximum erreicht. Das kann hier durch die Reaktionsgeschwindigkeit eines beispielsweise magnetorheologischen Fluides gewährleistet werden, welches innerhalb von einer Millisekunde oder etwas mehr sich entlang der Feldlinien eines Magnetfeldes verketten kann und somit quer dazu den Strömungswiderstand erheblich vergrößern kann.

In allen Ausgestaltungen sind vorzugweise wenigstens eine Steuereinrichtung und wenigstens eine Sensoreinrichtung vorgesehen. Mit der Steuereinrichtung kann das steuerbare Drosselventil in Abhängigkeit von Sensorsignalen eingestellt werden. Grundsätzlich können unterschiedlichste Sensoren vorgesehen sein. Vorzugsweise ist wenigstens eine Sensoreinrichtung dazu vorgesehen, ein Maß für eine Relativgeschwindigkeit zu erfassen.

Insbesondere ist die Sensoreinrichtung dazu vorgesehen, ein Maß für eine Relativgeschwindigkeit des Kolbens zu der Dämpferkammer zu erfassen. Möglich ist es aber auch, dass eine Sensoreinrichtung eine Relativgeschwindigkeit des Standrohres und des Tauchrohres zueinander erfasst. Möglich ist es auch, dass eine Relativgeschwindigkeit des Standrohres beispielsweise in vertikaler Richtung erfasst wird, um daraus auf die aktuelle Belastung rückschließen zu können. Möglich ist auch die Erfassung der Beschleunigung(en) durch einen oder mehrere Sensoren. Möglich ist auch die Kombination von verschiedenen Sensortypen.

Besonders bevorzugt ist wenigstens eine Sensoreinrichtung dazu vorgesehen, eine Richtung der Relativbewegung zwischen den Kolben und der Dämpferkammer zu erfassen. Das ist z. B. bei der Verwendung von magnetorheologischen Fluiden von Bedeutung, da ohne Weiteres allein durch das Strömen des Dämpfungsmediums innerhalb des Einwegkreislaufes keine Aussage darüber getroffen werden kann, ob es sich um strömendes Dämpfungsmedium bei einem Einfedervorgang oder einem Ausfedervorgang handelt. Zur Lösung dieses Problems kann in einfachen Fällen wenigstens eine Sensoreinrichtung zur Erfassung der Richtung der Relativbewegung vorgesehen sein, die beispielsweise wenigstens ein auslenkbares Federplättchen umfasst, welches vorzugsweise durch entsprechende Vorbelastungseinrichtungen in eine Mittelstellung vorbelastet ist.

Eine solche Sensoreinrichtung kann beispielsweise in der Ausgleichskammer oder an einem Ausgleichskanal vorgesehen sein, der zu der Ausgleichskammer führt. Mit der Auslenkung des beispielsweise als Detektor dienenden Federplättchens kann erfasst werden, ob das Dämpfungsmedium aus der Ausgleichskammer herausströmt oder aber in sie hinein. Dementsprechend kann mit der Auslenkung des Detektors bestimmt werden, ob ein Einfeder- oder ein Ausfedervorgang vorliegt. Der Detektor muss nur in einem Bereich angeordnet werden, der in beiden Fällen von dem Dämpfungsmedium entsprechend durchströmt wird. Möglich ist es auch, dass zwei separate Sensoreinrichtungen vorgesehen sind, die separat das Einfedern und das Ausfedern erfassen.

Möglich ist es aber auch, dass eine Sensoreinrichtung vorhanden ist, die ein Maß für einen Federweg erfasst. Durch die zeitliche Änderung des Federweges kann darauf zurückgeschlossen werden, ob die Federgabel einfedert oder ausfedert. Möglich ist auch der Einsatz wenigstens eines Beschleunigungssensors, aus dessen oder deren Daten auf ein Einfedern oder ein Ausfedern geschlossen werden kann.

In allen Ausgestaltungen ist es möglich und bevorzugt, dass wenigstens eine Endlagendämpfung vorgesehen ist. Eine solche Endlagendämpfung kann die Dämpfung in einem Endbereich beim Einfedern oder Ausfedern entsprechend verstärken, um einen Durchschlag an der Federgabel zu verhindern.

Besonders bevorzugt ist im bestimmungsgemäßen Gebrauch die erste Kammer unterhalb der zweiten Kammer angeordnet. Vorzugsweise ist das Drosselventil oberhalb der Dämpferkammer angeordnet. Besonders bevorzugt ist die Ausgleichskammer oberhalb des Drosselventils vorgesehen. Die Ausgleichskammer kann aber auch unterhalb oder seitlich des Drosselventils vorgesehen sein, was die Strömungswege reduziert.

Bei solchen Ausgestaltungen wird ein besonders einfacher Aufbau ermöglicht. Gleichzeitig kann das Nachfüllen der Ausgleichskammer mit beispielsweise Druckluft einfach erfolgen. Das oben angeordnete Drosselventil oder die darüber angeordnete Ausgleichskammer ermöglicht auch das einfache Nachfüllen oder das einfache Austauschen vom Dämpfungsmedium. Auch die Wärmeabfuhr kann einfach erfolgen, da in dem oberen Bereich der Federgabel das Standrohr nicht mehr oder nicht mehr immer von dem Tauchrohr umgeben ist.

Ein erheblicher Vorteil einer solchen Ausgestaltung ist auch, dass der in einer Federgabel vorhandene Platz vorteilhaft ausgenutzt werden kann. Während meist nur ein geringer Durchmesser zur Verfügung steht, kann innerhalb der Standrohre oder Tauchrohre deren Länge ausgenutzt werden.

Durch die Einsatzeinrichtung kann der Strömungsquerschnitt des Rückströmkanals erheblich reduziert werden. Damit kann das Gesamtgewicht der Federgabel deutlich reduziert werden, was bei hohen Anforderungen von erheblichem Vorteil ist.

Insbesondere ist eine größte Länge, Erstreckung oder ein größter Durchmesser eines Strömungsquerschnittes des Rückströmkanals an der Einsatzeinrichtung kleiner als ein Durchmesser des Rohrsystems. Insbesondere ist eine größte Länge oder eine größte Erstreckung des Strömungsquerschnittes an der Einsatzeinrichtung quer zur Strömungsrichtung kleiner als ein Radius und besonders bevorzugt kleiner als ein halber Radius des Rohrsystems. Insbesondere beziehen sich die Abmessungen des Rohrsystems hier auf den Außendurchmesser und besonders bevorzugt den Innendurchmesser des Standrohres.

Im Stand der Technik wird der Zwischenraum zwischen der äußeren Umwandung der Dämpferkammer und der Innenwandung des Tauchrohres vollständig als Strömungskanal genutzt. Bei einer solchen Ausgestaltung würde hier der gesamte Zwischenraum zwischen der Außenwandung der Dämpferkammer und der Innenwandung des Standrohres mit dem Dämpfungsmedium angefüllt. Durch das erhebliche Volumen dieses Zwischenraums wäre dort eine erhebliche Menge an Dämpfungsmedium vorhanden, die das Gesamtgewicht der Federgabel ganz erheblich erhöhen würde. Eine Lösung zur Reduzierung des Gewichts könnte darin bestehen, den Zwischenraum zu verkleinern, in dem beispielsweise der Innenraum bzw. der Innendurchmesser des Standrohres verkleinert wird. Dadurch würde ein kleinerer Zwischenraum entstehen, sodass dort eine geringere Masse an Dämpfungsmedium vorhanden wäre. Doch eine solche Lösung hätte den Nachteil, dass die Kompatibilität der Federgabel mit dem üblicherweise verwendeten Abmessungen nicht mehr gegeben wäre. Es könnten nicht Standrohre und Tauchrohre eingesetzt werden, wie sie derzeit üblich sind. Das würde die Konstruktion einer solchen Gabel erheblich aufwendiger gestalten.

Alternativ dazu könnte auch der Außendurchmesser der Dämpferkammer vergrößert werden, um einen kleineren Spalt in dem Zwischenraum zu ermöglichen. Auch bei dieser Lösung würde sich eine geringere Masse an Dämpfungsmedium in dem Zwischenraum sammeln, sodass das Gewicht reduzierbar wäre. Nachteilig bei dieser Lösung ist allerdings, dass die Wandreibung bei der Strömung des Dämpfungsmediums ganz erheblich zunehmen würde. Dadurch wäre es schwierig, die geforderten Dämpfungseigenschaften einzustellen, da durch den hohen Strömungswiderstand im Zwischenraum niedrige Dämpfungswerte praktisch nicht mehr einstellbar wären.
Auch bei einer Verringerung des Innendurchmessers des Standrohres würde sich übrigens eine entsprechende Erhöhung des Strömungswiderstandes des Dämpfungsmediums ergeben.
Das bedeutet, dass sowohl eine Verringerung der Durchmesser des Standrohres als auch eine Vergrößerung der Dämpferkammer keine zufriedenstellende Lösung bietet. Die erstaunliche Lösung ist nun, wenigstens eine Einsatzeinrichtung in dem Zwischenraum zu positionieren, die einen genau definierten Rückströmkanal begrenzt. Der Rückströmkanal an der Einsatzeinrichtung weist dabei vorzugsweise eine geringe Umfangsfläche im Vergleich zu seinem Querschnitt auf. Dadurch wird die Wandreibung an dem Rückströmkanal reduziert. Die im Vergleich zur Umfangsfläche große Querschnittsfläche erlaubt hohe Strömungsgeschwindigkeiten des Dämpfungsmediums, ohne den Strömungswiderstand unzulässig zu erhöhen. Deswegen wird zusätzlich die Einsatzeinrichtung aus einem solchen Material und derart konstruiert, dass sich eine mittlere Dichte der Einsatzeinrichtung zwischen dem Rohrsystem und der Dämpferkammer ergibt, die kleiner als eine mittlere Dichte des Dämpfungsmediums ist. Durch eine solche Maßnahme wird sichergestellt, dass Gewicht eingespart werden kann.
In bevorzugten Ausgestaltungen ist die mittlere Dichte der Einsatzeinrichtung geringer als halb so groß wie die mittlere Dichte des Dämpfungsmediums oder doch wenigstens niedriger als drei Viertel der Dichte des Dämpfungsmediums. Dadurch kann eine erhebliche Gewichtsreduktion der Federgabel erfolgen, während gleichzeitig sowohl hohe Dämpfungsraten als auch geringe Dämpfungsraten einstellbar sind. Durch abgeschlossene Hohlräume in der Einsatzeinrichtung oder besonders leichte Materialien kann das Gewicht erheblich reduziert werden.

In bevorzugten Ausgestaltungen ist wenigstens ein weiteres Drosselventil als Absenkventil mit einer weiteren Felderzeugungseinrichtung vorgesehen. Das weitere Drosselventil als Absenkventil kann beispielsweise dafür vorgesehen sein, die Federgabel bei Bergauffahrten abzusenken oder abgesenkt zu halten.

Das weitere Drosselventil als Absenkventil kann ebenso wie das oben beschriebene Drosselventil eine elektrische Spule als Felderzeugungseinrichtung umfassen. Es ist auch möglich, dass ein Remanenzmagnet und/oder ein Permanentmagnet als Felderzeugungseinrichtung vorgesehen ist bzw. sind. In allen Ausgestaltungen ist das Absenkventil bevorzugt in Reihe zu dem Drosselventil geschaltet.

Wird beispielsweise eine elektrische Spule eingesetzt, so wird mit dieser Felderzeugungseinrichtung nur dann ein entsprechendes Magnetfeld erzeugt, wenn die Absenkung der Federgabel bei Bergauffahrten beispielsweise erwünscht ist und wenn sich die Federgabel im Ausfederungszustand befindet. Dann sorgt die erhöhte Dämpfung für eine zuverlässige Positionierung der Federgabel im abgesenkten Zustand. Gleichzeitig kann noch eine Dämpfung von Stößen erfolgen. Nach der Bergauffahrt kann das Absenkventil wieder ausgeschaltet werden, sodass die Federgabel im normalen Betrieb schnell wieder ihre normale ausgefederte Position erreicht.

Wenn beispielsweise nur ein Permanentmagnet als Felderzeugungseinrichtung für das Absenkventil gewählt wird, so wird dieser regelmäßig sowohl bei der Zugstufendämpfung als auch bei der Druckstufendämpfung wirken. Dadurch ergibt sich nach einer erstmaligen Einfederung ein stärkeres Dämpfungsverhalten der Federgabel.

Es ist möglich, dass beispielsweise ein Permanentmagnet mechanisch zwischen einer Normalstellung und einer weiteren Stellung wie beispielsweise einer Absenkstellung beweglich ist. Der Permanentmagnet kann beispielsweise an einer drehbaren Einrichtung vorgesehen sein, die das Standrohr außen umgibt. Mit einem Einstellhebel kann der Permanentmagnet in die gewünschte Winkelstellung gebracht werden, wo er berührungslos durch das Standrohr hindurch auf das Absenkventil einwirkt.

In allen Ausgestaltungen ist es bevorzugt, dass wenigstens ein Einwegventil und/oder wenigstens ein Rückschlagventil als Shim-Ventil ausgebildet ist bzw. sind. Ein solches Shim-Ventil kann einen Stapel unterschiedlicher Scheiben aufweisen, die ein nichtlineares Verhalten an dem Rückschlagventil zur Verfügung stellen.

Besonders bevorzugt ist wenigstens ein Einwegventil und/oder wenigstens ein Rückschlagventil justierbar. Das kann beispielsweise von außen erfolgen.

Bei Einsatz eines MRF als Dämpfungsmedium ist es bevorzugt, dass wenigstens eine einstellbare Ventileinrichtung vorgesehen ist, welche über Remanenzeigenschaften verfügt. Ein einstellbare Ventileinrichtung kann aus einem Ventil oder aus zwei oder mehr in Serie geschalteten Einzelventilen bestehen. Eines der Ventile kann als Sperrventil ausgebildet sein, welches insbesondere rein mechanisch z. B. als Shim-Ventil das Dämpfungsmedium nur in eine Richtung durchlässt. Ein weiteres Ventil bzw. Teilventil kann in das Sperrventil der einstellbaren Ventileinrichtung integriert sein oder benachbart zu dem Sperrventil angeordnet sein. Das weitere Ventil kann auf mechanischer und/oder elektrischer und/oder auf magnetorheologischer Basis arbeiten und durch Erzeugen oder Anlegen eines einstellbaren, vorbestimmten oder festen Magnetfeldes die Strömung durch einen Dämpfungskanal des weiteren Ventils im gewünschten Ausmaß dämpfen. Das weitere Ventil innerhalb der einstellbaren Ventileinrichtung kann auf Basis von Remanenz vorgesehen sein. Dann ist dem weiteren Ventil ein elektrische Spule zur Erzeugung von magnetischen Impulsen zugeordnet, mit welchen ein dauerhaft wirkendes Magnetfeld in einem hart- oder weichmagnetischen Material verändert oder eingestellt wird.

Möglich ist es auch, dass die einstellbare Ventileinrichtung wenigstens einen Permanentmagneten und/oder wenigstens eine elektrische Spule zur Erzeugung bzw. Anlegung eines gewünschten Magnetfeldes aufweist.

Bevorzugt ist es auch, dass wenigstens eine einstellbare Ventileinrichtung ein Remanenzventil umfasst oder aus nur einem ein Remanenzventil besteht, welches auf magnetorheologischer Basis arbeitet und dessen Magnetfeld durch wenigstens einen Impuls einer elektrischen Spule einstellbar ist.

Grundsätzlich ist es bevorzugt, dass wenigstens ein einstellbares Ventil und/oder wenigstens ein Rückschlagventil als einstellbare Ventileinrichtung ausgeführt ist.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Fig. 1: eine Vorderansicht einer erfindungsgemäßen Federgabel;
- Fig. 2: ein Rohrsystem mit einer Dämpfereinrichtung für die Federgabel nach Fig. 1 in einer ersten Ausführungsform;
- Fig. 3: ein Rohrsystem mit einer Dämpfereinrichtung für die Federgabel nach Fig. 1 in einer zweiten Ausführungsform;
- Fig. 4: ein Rohrsystem mit einer Dämpfereinrichtung für die Federgabel nach Fig. 1 in einer dritten Ausführungsform;
- Fig. 5: einen schematischen Querschnitt durch ein Rohrsystem einer Federgabel nach den Fig. 2 bis 4;
- Fig. 6: einen schematischen Querschnitt durch ein Drosselventil, wie es in einem vorhergehenden Ausführungsbeispiel eingesetzt werden kann; und
- Fig. 7: einen schematischen Querschnitt durch ein Drosselventil, wie es in einem vorhergehenden Ausführungsbeispiel eingesetzt werden kann.

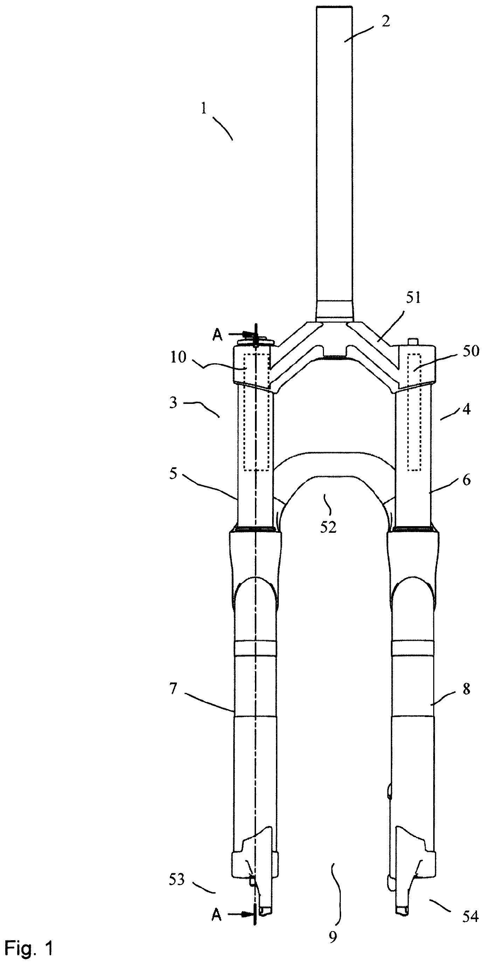

Fig. 1 zeigt eine erfindungsgemäße Federgabel 1 in einer Vorderansicht. Die Federgabel 1 verfügt über ein Steuerrohr 2, an dem eine Gabelkrone 51 befestigt ist. An der Gabelkrone 51 sind die beiden Rohrsysteme 3 und 4 angeordnet. Jedes Rohrsystem umfasst ein Standrohr und ein Tauchrohr.

Das Rohrsystem 3 umfasst das Standrohr 5 und das Tauchrohr 7, während das Rohrsystem 4 das Standrohr 6 und das Tauchrohr 8 aufweist. Die beiden Tauchrohre 7 und 8 sind über einen Verbindungsbügel 52 miteinander verbunden. Beide Rohrsysteme 3 und 4 sind teleskopierbar ausgeführt. Am unteren Ende der Federgabel sind Ausfallenden 53 und 54 vorgesehen, zwischen denen ein Laufrad eines Fahrrads angeordnet werden kann. Zwischen den Rohrsystemen 3 und 4 ist dazu der Radaufnahmeraum 9 vorgesehen.

Im dargestellten Ausführungsbeispiel ist in dem Rohrsystem 3 eine Dämpfereinrichtung 10 angeordnet, während in dem Rohrsystem 4 eine Federeinrichtung 50 angeordnet ist.

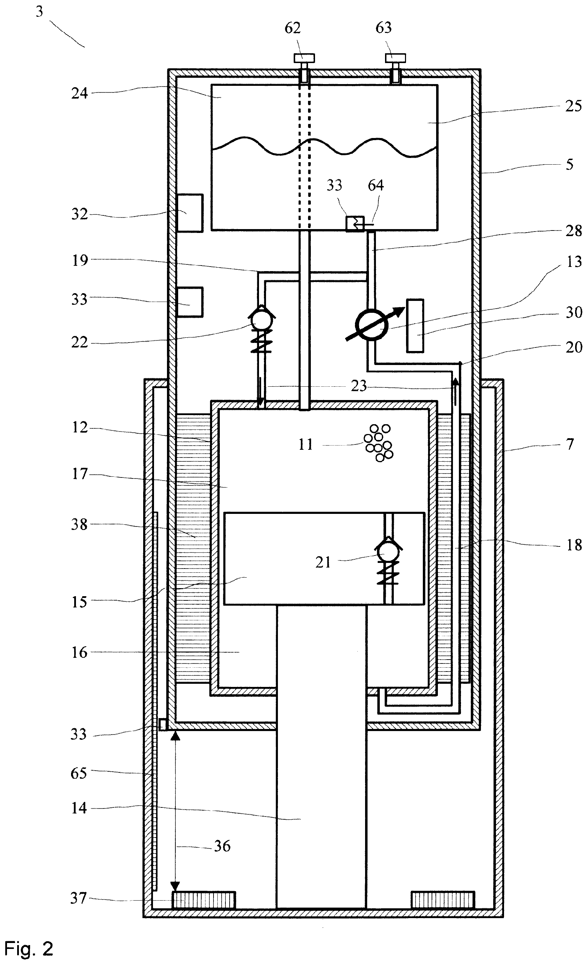

Fig. 2 zeigt eine schematische Querschnittsdarstellung des Rohrsystems 3 der Federgabel aus Fig. 1.

Das Standrohr 3 ist über die Gabelkrone 51 mit dem Rahmen eines nicht dargestellten Fahrrades verbunden. Das Tauchrohr 7 gleitet teleskopierend auf dem Standrohr 5. Im Inneren des Standrohres 5 ist die Dämpfereinrichtung 10 angeordnet, die eine Dämpferkammer 12 umfasst, die durch einen Kolben 15 in eine erste Kammer 16 und eine zweite Kammer 17 aufgeteilt ist.

Der Kolben 15 ist mit einer Kolbenstange 14 versehen, die sich durch die erste Kammer 16 hindurch und aus dem Standrohr 5 hinaus erstreckt. Das andere Ende der Kolbenstange ist mit dem unteren Ende des Tauchrohres 7 verbunden. Oberhalb der Dämpferkammer 12 ist das Drosselventil 13 angeordnet, welches hier elektrisch einstellbar ist. Dem Drosselventil 13 ist eine Felderzeugungseinrichtung 30 zugeordnet, die zur Erzeugung eines Magnetfeldes dient.

Als Dämpfungsmedium 11 wird hier ein magnetorheologisches Fluid verwendet. Denkbar ist auch die Verwendung elektrorheologischer Fluide.

Ein erstes Einwegventil 21 ist in dem Kolben 15 vorgesehen, der ansonsten als Pumpkolben ausgeführt ist. Das Einwegventil 21 kann beispielsweise als Shim-Ventil ausgeführt sein und erlaubt nur die Strömung des Dämpfungsmediums 11 von der zweiten Kammer 17 durch den Kolben 15 in die erste Kammer 16 hinein, wenn der Druck innerhalb der zweiten Kammer 17 größer ist als innerhalb der ersten Kammer 16. In Gegenrichtung blockiert das Einwegventil 21.

Am hier unteren Ende der ersten Kammer 16 beginnt der Rückströmkanal 18, durch den das Dämpfungsmedium 11 von der ersten Kammer 16 zu dem Drosselventil 13 strömen kann. Das in Umlaufrichtung 23 strömende Dämpfungsmedium 11 durchströmt das Drosselventil 13, wo es entsprechend der Einstellungen der Felderzeugungseinrichtung 30 gedämpft wird.

Der sich an das Drosselventil 13 anschließende Verbindungskanal 19 führt zu dem zweiten Einwegventil 22, welches in Umlaufrichtung 23 öffnet, wenn der Druck in dem Verbindungskanal 19 größer ist als der Druck in der zweiten Kammer 17. Von dem Verbindungskanal 19 zweigt hier der Ausgleichskanal 28 zu der Ausgleichskammer 24 ab, in der ein Ausgleichsvolumen 25 vorhanden ist. Das Ausgleichsvolumen 25 kann beispielsweise ein unter Überdruck stehender flexibler Balg oder ein Ballon oder dergleichen sein, der von dem Volumen der Ausgleichskammer 24 elastisch abgetrennt ist. Möglich ist auch der Einsatz eines Trennkolbens oder einer Feder zur Vorspannung.

Der Rückströmkanal 18 verläuft durch den Zwischenraum zwischen der Dämpferkammer 12 und der inneren Umfangsfläche des Standrohrs 5. Dort befindet sich in dem Zwischenraum eine Einsatzeinrichtung 38, die einen definierten Querschnitt für den Rückströmkanal 18 zur Verfügung stellt. Dadurch kann das Volumen des Dämpfungsmediums 11 erheblich reduziert werden, da nur noch der Querschnitt des Rückströmkanals 18 an der Einsatzeinrichtung 38 mit dem Dämpfungsmedium 11 gefüllt ist und nicht mehr der vollständige Zwischenraum. Dadurch kann das Gewicht der Dämpfereinrichtung 10 und der gesamten Federgabel 1 erheblich gesenkt werden.

Eine Steuereinrichtung 32 dient zur Steuerung. Die Steuerung 32 ist mit Sensoren 33 verbunden, die den aktuellen Zustand der Federgabel erkennen und entsprechend darauf reagieren. Beispielsweise kann eine Sensoreinrichtung 33 den Federweg 36 in kurzen zeitlichen Abständen erfassen, sodass aus dem zeitlichen Ablauf der Signale auch auf Relativgeschwindigkeiten und somit auf Beschleunigungswerte geschlossen werden kann. Auch der Einsatz von Beschleunigungssensoren ist möglich. Der Federweg 36 kann über eine Positionserkennung der Sensoreinrichtung 33 relativ zu einer Maßeinrichtung 65 erfasst werden.

Endlagendämpfungen 37 können vorgesehen sein, um einen Anschlag des Tauchrohres 7 an das Standrohr 5 zu verhindern.

Im Betrieb führt ein Stoß zu einem Einfedern des Kolbens 15. Da das Dämpfungsmedium nach oben über das Einwegventil 22 nicht entweichen kann und da der Druck in der zweiten Kammer 17 steigt, öffnet das erste Einwegventil 21 und es strömt Dämpfungsmedium 11 von der zweiten Kammer durch das erste Einwegventil 21 in die erste Kammer 16.

Da beim Einfedern mehr Dämpfungsmedium in der zweiten Kammer 11 verdrängt wird, als in der ersten Kammer 16 zur Verfügung steht, muss das der eintauchenden Kolbenstange 14 entsprechende Volumen durch den Rückströmkanal 18 in Umlaufrichtung 23 zu dem Drosselventil 13 strömen, wo der Dämpfungskanal 31 des Drosselventils 13 dem Magnetfeld der Felderzeugungseinrichtung 30 ausgesetzt wird.

Dadurch wird das Dämpfungsmedium entsprechend gedämpft.

Von dem Drosselventil 13 aus strömt das Dämpfungsmedium 11 ein kurzes Stück durch den Verbindungskanal 19 und dann durch den Ausgleichskanal 28 in die Ausgleichskammer 24 hinein. Das Einströmen des Dämpfungsmediums 11 kann durch den Detektor 64 der Sensoreinrichtung 33 am Einlass in die oder innerhalb der Ausgleichskammer 24 erfasst werden. Da sich das als Detektor 64 eingesetzte Detektorplättchen hier in Strömungsrichtung verbiegt oder verdreht, kann auf den Druckstufenfall zurückgeschlossen werden.

Beim Ausfedern, also im Zugstufenfall, bewegt sich der Kolben 15 in der Darstellung gemäß Fig. 2 nach unten und ein entsprechendes Stück der Kolbenstange 14 tritt aus der Dämpferkammer 12 wieder aus. Das sich in der ersten Kammer 16 befindende Dämpfungsmedium 11 kann nicht durch das nun blockierende Einwegventil 21 in die zweite Kammer 17 übertreten, sondern muss durch den Rückströmkanal 18 in die gleiche Umlaufrichtung 23 strömen, wie es in der Druckstufe der Fall war.

Das durch den Rückströmkanal 18 strömende Dämpfungsmedium 11 strömt durch das Drosselventil 13, wo es nun einem entsprechend angepassten Magnetfeld der Felderzeugungseinrichtung 30 ausgesetzt wird.

Da im Zugstufenfall durch das Kolbenstangenvolumen bedingt nur weniger Dämpfungsmedium 11 aus der ersten Kammer 16 austritt, wie als Ausgleich in der zweiten Kammer 17 benötigt wird, öffnet das zweite Einwegventil 22 und es tritt aus der Ausgleichskammer 24 Dämpfungsmedium aus. Das Dämpfungsmedium tritt durch den Ausgleichskanal 28 und den Verbindungskanal 19 in die zweite Kammer 17 ein. Bei dem Austreten des Dämpfungsmediums 11 aus der Ausgleichskammer 24 wird das Detektorplättchen als Detektor der Sensoreinrichtung 33 entsprechend verformt, sodass auf dem Zugstufenfall zurückgeschlossen werden kann.

Das Ausführungsbeispiel nach Fig. 2 kann auch mit einem elektrisch betätigten Drosselventil 13 realisiert werden, bei dem ein konventionelles Öl als Dämpfungsmedium eingesetzt wird.

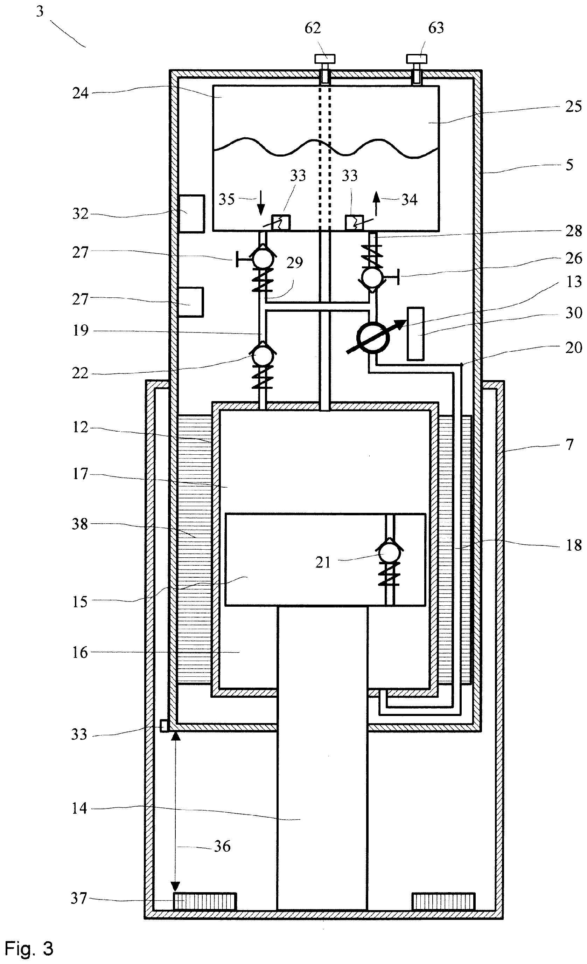

Fig. 3 zeigt ein weiteres Ausführungsbeispiel, wobei in einem ebenfalls stark schematischen Querschnitt das Rohrsystem 3 einer Federgabel 1 gemäß Fig. 1 dargestellt ist. Grundsätzlich ist das Rohrsystem 3 gemäß Fig. 3 ähnlich aufgebaut wie das Rohrsystem 3 gemäß Fig. 2. Im Unterschied zu der Darstellung gemäß Fig. 2 wird der Verbindungskanal 19 nach dem Drosselventil 13 aber in zwei Ausgleichskanäle 28 und 29 zum Austausch mit der Ausgleichskammer 24 aufgeteilt.

In dem ersten Ausgleichskanal 28 von dem Drosselventil 13 zur Ausgleichskammer 24 hin ist ein erstes Rückschlagventil 26 vorgesehen, welches nur einen Durchfluss des Dämpfungsmediums 11 von dem Drosselventil 13 in die Ausgleichskammer 28 hinein erlaubt. Eine Sensoreinrichtung 33 am Eingang der Ausgleichskammer kann die Richtung 34 der Relativbewegung erkennen und damit auf den Druckstufenfall schließen.

Damit das Dämpfungsmedium 11 aus der Ausgleichskammer 24 austreten kann, ist der zweite Ausgleichskanal 29 vorgesehen, an dem ein zweites Rückschlagventil 27 angeordnet ist. Dieses Rückschlagventil 29 öffnet nur, wenn der Druck in der Ausgleichskammer 24 größer ist als der Druck in dem Verbindungskanal 19.

Hier im Ausführungsbeispiel sind die Rückschlagventile 26 und 27 einstellbar. Es ist möglich, dass Bedienelemente außen an der Federgabel vorgesehen sind, sodass die Rückschlagventile 26 und 27 gegebenenfalls während der Fahrt vom Fahrer bedienbar sind. Dazu können z. B. an der Gabelkrone entsprechend Einstellräder vorgesehen sein. Möglich ist auch eine elektrische Fernsteuerung.

Bei diesen Ausgestaltungen ist es möglich, dass das Drosselventil 13 ein elektrisch einstellbares Drosselventil ist, und dass als Dämpfungsmedium 11 ein magnetorheologisches Fluid verwendet wird.

Möglich ist aber auch ein konventionelles Öl und ein einstellbares oder ein fest eingestelltes Drosselventil 13. Durch die unterschiedlichen Ventile 26 und 27 und gegebenenfalls das Drosselventil 13 können die Dämpfungseigenschaften der Federgabel 1 getrennt für die Zugstufe und die Druckstufe eingestellt werden. Bei einer rein mechanischen Lösung müssen auch keine Sensoreinrichtungen 33 vorgesehen sein. In dem Fall kann auch auf eine Steuereinrichtung 32 verzichtet werden.

Falls die Federgabel 1 gemäß Fig. 3 mit einem magnetorheologischen Fluid betrieben wird, kann es dennoch der Fall sein, die Rückschlagventile 25 und 26 einstellbar oder (vor-)justierbar vorzusehen, da damit eine Anpassung an eine Grundkurve erfolgen kann. Situationsabhängig kann dann eine Einstellung des Drosselventils 13 erfolgen.

Wie schon in Fig. 1 dargestellt, sind auch in Fig. 2 und Fig. 3 Ventile 62 und 63 vorgesehen. Das Ventil 62 kann zum Nachfüllen oder zum Austauschen von Dämpfungsmedium 11 dienen, während das Ventil 63 beispielsweise zur Überprüfung des Luftdrucks in dem Ausgleichsvolumen 25 der Ausgleichskammer 24 oder aber zum Nachfüllen von Druckluft dient.

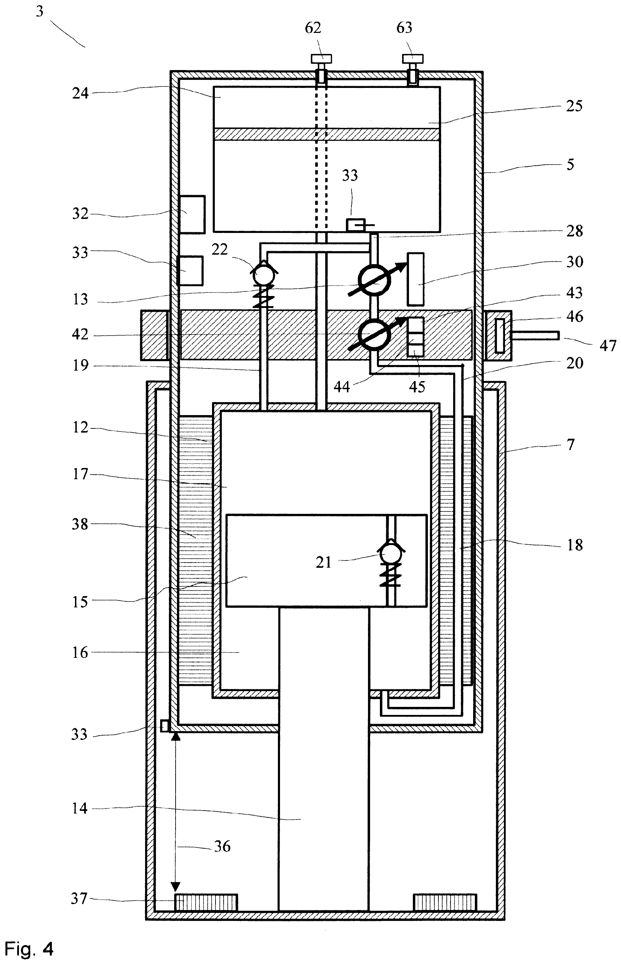

Fig. 4 zeigt ein anderes Rohrsystem 4 für eine Federgabel 1 gemäß Fig. 1. Auch dieses Rohrsystem 4 ist grundsätzlich ähnlich aufgebaut wie das Rohrsystem 4 nach den Fig. 2 und 3.

Im Unterschied zur Ausgestaltung gemäß Fig. 2 weist das Rohrsystem gemäß Fig. 4 noch ein Absenkventil 42 auf, welches in Reihe und hier vor dem Drosselventil 13 angeordnet ist. Hier ist die Dämpfereinrichtung 10 mit meinem magnetorheologischen Fluid als Dämpfungsmedium 11 ausgerüstet, sodass die Felderzeugungseinrichtungen 30 und 43 für das Drosselventil 13 und das Absenkventil 42 vorgesehen sind.

Die Felderzeugungseinrichtung 43 nach Fig. 4 kann eine elektrische Spule 44 umfassen, die ein entsprechendes Magnetfeld erzeugt. Es ist auch möglich, dass beispielsweise ein Remanenzmagnet 45 vorgesehen ist, dessen Feldstärke bei Bedarf oder in periodischen Abständen durch magnetische Impulse der elektrischen Spule 44 auf den aktuell gewünschten Wert eingestellt wird. Damit kann ein dauerhaftes Magnetfeld in dem Remanenzmagneten 45 erzeugt werden, welches auch nach Abschalten des für die elektrische Spule 44 benötigten Stroms zur Verfügung steht. Bei Bedarf kann die magnetische Feldstärke der Felderzeugungseinrichtung 43 noch durch ein magnetisches Feld der elektrischen Spule 44 modifiziert werden.

Alternativ oder zusätzlich dazu kann noch ein Permanentmagnet 46 an einem äußeren Bedienhebel vorgesehen sein, der zum Beispiel um das Standrohr 5 herum drehbar angeordnet ist. Durch Positionierung des Permanentmagneten 46 derart, dass dessen Magnetfeld das Absenkventil 42 in gewünschter Weise mit einem Magnetfeld beaufschlagt, kann in dem Absenkventil 42 ein entsprechendes Magnetfeld erzeugt werden. Durch Wegdrehen wirkt das Magnetfeld nicht mehr auf das Absenkventil 42 ein.

Im einfachsten Fall wird nur eine elektrische Spule 44 zur Felderzeugung eingesetzt. Dann ist es auf einfache Art und Weise möglich, eine einmal ein gewisses Stück eingefederte Federgabel am selbsttätigen Ausfedern zu hindern. Das erfolgt dadurch, dass im Zugstufenfall immer ein zusätzliches Magnetfeld an dem Absenkventil 42 erzeugt wird, was das Ausfedern zusätzlich dämpft. Das führt im Resultat zu einer dauerhaft abgesenkten Federgabel, die beispielsweise bei Bergauffahrten von Vorteil ist. Gleichzeitig ist eine individuelle Dämpfung von Stößen möglich.

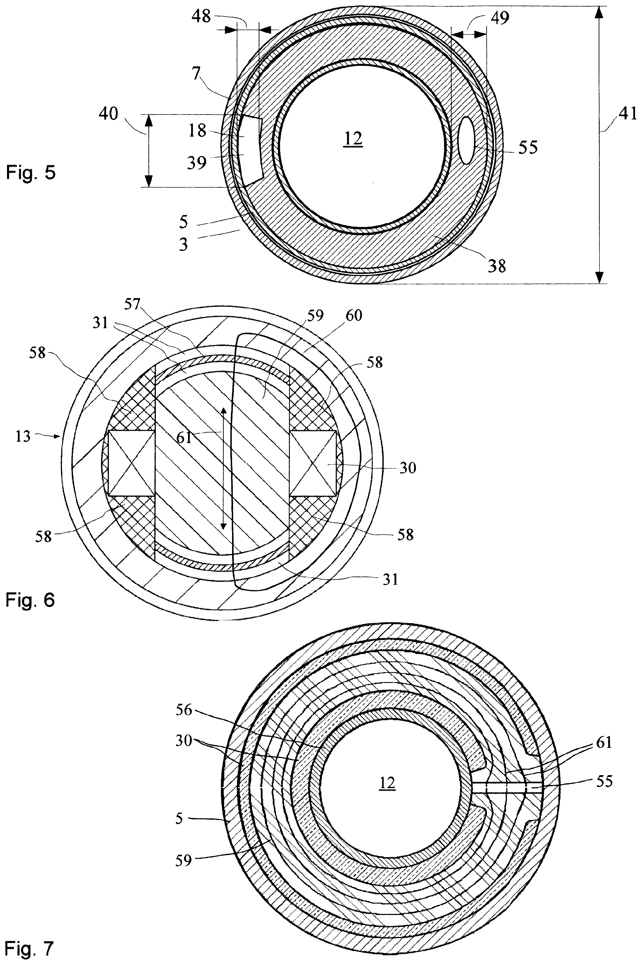

Fig. 5 zeigt einen typischen Querschnitt durch ein Rohrsystem nach den Fig. 2, 3 oder 4. Dabei ist in der Mitte die ungeschnittene Dämpferkammer 12 zu erkennen. Radial außen ist das Standrohr 5 des Rohrsystems 3 im Schnitt dargestellt. Radial nach außen schließt sich das gegenüber dem Standrohr 5 teleskopierbare Tauchrohr 7 an.

Zu der Dämpfereinrichtung 10 bzw. der Dämpferkammer 12 ergibt sich ein radialer Abstand 49, der hier praktisch vollständig durch eine Einsatzeinrichtung 38 gefüllt ist. Die Einsatzeinrichtung 38 kann einteilig sein, kann aber auch aus zwei oder mehr Teilen gebildet werden. Die Einsatzeinrichtung 38 erstreckt sich in den Ausführungsbeispielen im Wesentlichen über die Länge der Dämpferkammer 12, kann aber auch länger oder kürzer sein.

Auf der einen Seite ist ein Rückströmkanal 18 an der Einsatzeinrichtung 38 vorgesehen. Der Rückströmkanal 18 dient hier als Rückströmkanal für das Dämpfungsmedium 11 auf dem Weg von der ersten Kammer 11 über das Drosselventil in die Ausgleichskammer 24 oder in die zweite Kammer 17. Der Rückströmkanal 18 kann etwa die hier dargestellte Form oder aber andere Formen wie runde, quadratische oder rechteckige Formen aufweisen. Grundsätzlich ist auch jede andere Form möglich wie beispielsweise eine elliptische Form.

Besonders vorteilhaft ist es, wenn das Verhältnis der Querschnittsfläche als Strömungsquerschnitt 39 zu dem Umfang des Rückströmkanals 18 groß ist, sodass der Strömungswiderstand des Dämpfungsmediums 11 in dem Rückströmkanal 18 auch bei hohen Strömungsgeschwindigkeiten relativ gering bleibt. Dazu ist das Verhältnis des größten Durchmessers bzw. der längsten Erstreckung 40 zu der Breite 48 hier relativ klein. Insbesondere ist die Länge 40 kleiner als der Durchmesser 41 des Rohrsystems und insbesondere kleiner als der Radius des Rohrsystems, vorzugweise auch kleiner als der halbe Radius des Rohrsystems. Andererseits ist der Strömungsquerschnitt 39 so groß wie nötig.

Auf der anderen Seite kann ein gleichartiger gestalteter Kanal vorgesehen sein. Möglich ist, dass beide Kanäle z. B. einen rechteckigen oder elliptischen Querschnitt aufweisen. Der andere Kanal 55 kann beispielsweise zur Durchführung elektrischer Leitungen oder dergleichen dienen. Möglich ist es auch, dass beide Kanäle als Rückstromkanäle eingesetzt werden.

Insgesamt kann die Einsatzeinrichtung massiv ausgeführt sein und es ist auch möglich, dass die Einsatzeinrichtung 38 hohle Bereiche oder Hohlkammern aufweist, sodass die durchschnittliche Dichte der Einsatzeinrichtung 38 reduziert wird. Die Einsatzeinrichtung kann wenigstens teilweise aus Metall und/oder Kunststoff bestehen.

Die durchschnittliche Dichte der Einsatzeinrichtung 38 wenigstens im Bereich des Zwischenraums zwischen dem Rohrsystem 4 und der Dämpferkammer 12 ist geringer als die Dichte des Dämpfungsmediums 11 und insbesondere höchstens halb so groß. Dadurch kann ein erheblicher Gewichtsanteil eingespart werden. Versuche haben gezeigt, dass das Gewicht der Dämpfereinrichtung um erheblich mehr als 10 % gesenkt werden konnte. Auch 20 % und mehr können möglich sein.

Fig. 6 zeigt einen schematischen Querschnitt eines beispielhaft dargestellten Drosselventils 13. Innerhalb des hier dargestellten Drosselventils 13 ist zentral ein Kern 59 vorgesehen, der von einer gewickelten elektrischen Spule als Felderzeugungseinrichtung 30 umgeben ist. Hier sind insgesamt vier Dämpfungskanäle 31 vorgesehen, von denen jeweils zwei durch einen Fächer oder eine fächerartige Struktur 57 voneinander getrennt sind. Dadurch wird die Wirksamkeit erhöht.

Die Feldlinien 61 bei angelegtem magnetischen Feld verlaufen durch den Kern 59, treten etwa senkrecht durch einen Dämpfungskanal 31, den sich anschließenden Fächer 57 und den zweiten Dämpfungskanal 31 hindurch und werden durch den Ring 60 aus einem magnetisch leitfähigen Material, hier etwa im Halbkreis um den Kern herum gelenkt bis im unteren Bereich wieder zwei Dämpfungskanäle 31 mit dazwischen liegender Fächerwand 57 vorgesehen sind, durch den die Feldlinien etwa senkrecht durchtreten, sodass insgesamt geschlossene Feldlinien 61 vorliegen. In Fig. 4 ist nur eine Feldlinie stellvertretend dargestellt.

Benachbart zu einer elektrischen Spule 30 sind magnetische Isoliermaterialien 58 vorgesehen, um das magnetische Feld, wie gewünscht zu formen.

Fig. 7 zeigt einen schematischen Querschnitt durch ein Rohrsystem mit einem Drosselventil. In dem Standrohr 5 ist ein Zylinder mit einer Wandung 52 angeordnet. Die Wandung 52 begrenzt die Dämpferkammer 12. Zwischen dem Zylinder und dem Standrohr 5 ist eine Spule als Magneteinrichtung 30 vorgesehen. Die Spule ist um den Ringkern 59 gewickelt. Der ringförmige Kern 59 weist an einer Stelle einen Schlitz auf. Dieser Schlitz bildet den Dämpfungsspalt 55, durch den das magnetorheologische Fluid durchtreten muss. Der Dämpfungsspalt 55 wird mit dem durch die elektronische Steuereinrichtung 32 gesteuerten Magnetfeld beaufschlagt. Beispielhaft sind einige Magnetfeldlinien 61 eingezeichnet, die den Dämpfungsspalt 55 etwa senkrecht durchsetzen. Diese Ausgestaltung ermöglicht einen besonders energieeffizienten Dämpfer. Im Inneren ist die Dämpferkammer 12 vorgesehen.

Diese Ausgestaltung nach Fig. 7 mit der hier dargestellten langen dünnen Zylinderspule bietet erhebliche Vorteile. Die magnetische Spannung lässt sich über das Produkt aus Windungszahl und Spulenstrom berechnen. Die Spule soll nun in dem Magnetkreis ein definiertes Magnetfeld erzeugen, z. B. einen bestimmten magnetischen Fluss oder ein Feld bestimmter magnetischer Feldstärke. Gemäß der Formel kann die Spule auch als eine einzelne Windung berechnet werden, in der ein entsprechend hoher Strom fließt (nämlich der Spulenstrom multipliziert mit der Windungszahl).

Für einen Magnetkreis ist es im Wesentlichen unerheblich, ob wenig Strom auf zahlreichen dünnen Windungen oder entsprechend mehr Strom auf wenigen oder gar einer einzelnen Windung um den Kern kreist, solange der Spulenstrom multipliziert mit der Windungszahl konstant bleibt.

Die Verluste ergeben sich aus dem Strom zum Quadrat und dem elektrischen Widerstand. Die einzelnen Leiter lassen sich auch nicht beliebig dicht aneinander packen und bedingt durch die Isolation und den geometrischen Aufbau hat die Spule einen (Kupfer-) Füllfaktor unter 100%. Ausgehend von einem vorgegebenen Bauraum und gleicher Windungszahl hat folglich eine Spule mit höherem Füllfaktor mehr leitfähiges Material (=dickere Drähte), wodurch der Widerstand und somit die Verlustleistung sinken. Ausgehend von gleicher Windungszahl und gleicher Drahtstärke bedeutet ein höherer Füllfaktor eine kleinere Spule. Dadurch sinkt in der Regel die mittlere Windungslänge und somit auch der elektrische Widerstand. Hier ist ein extrem hoher Füllfaktor erreichbar. Deshalb ist mit der in Fig. 7 dargestellten Konstruktion ein besonders geringer Energieverbrauch erzielbar, der insbesondere bei Outdoorprodukten sehr wichtig und vorteilhaft ist.

Insgesamt stellt die Erfindung eine vorteilhafte Federgabel zur Verfügung, die insbesondere beim Einsatz von beispielsweise magnetorheologischen Fluiden vorteilhafte Eigenschaften aufweist. Es wird ein großer Hub ermöglicht, da die Einbauten in dem Rohrsystem 3 kleinbauend ausgestaltet werden können. Es wird im Normalfall nur ein einziges Drosselventil 13 benötigt, um sowohl im Druckstufenfall als auch im Zugstufenfall effektiv und unterschiedlich dämpfen zu können.

Durch die Verwendung einer Einsatzeinrichtung kann das Gesamtgewicht der einsatzfähigen Federgabel um fast 5 % oder mehr gesenkt werden, was die Attraktivität für den sportlichen und Wettbewerbseinsatz deutlich erhöht.

Auch bei Einsatz von konventionellen Dämpfungsölen oder anderen Fluiden und rein mechanischer Ausbildung der Drosselventile ist ein Aufbau einer vorteilhaften Federgabel möglich.

**Bezugszeichenliste:**

| | | | |
|---|---|---|---|
| 1 | Federgabel | 35 | Richtung |
| 2 | Steuerrohr | 36 | Federweg |
| 3 | Rohrsystem | 37 | Endlagendämpfung |
| 4 | Rohrsystem | 38 | Einsatzeinrichtung |
| 5 | Standrohr | 39 | Strömungsquerschnitt |
| 6 | Standrohr | 40 | Durchmesser, Länge |
| 7 | Tauchrohr | 41 | Durchmesser |
| 8 | Tauchrohr | 42 | Absenkventil |
| 9 | Radaufnahmeraum | 43 | Felderzeugungseinrichtung |
| 10 | Dämpfereinrichtung | 44 | elektrische Spule |
| 11 | Dämpfungsmedium | 45 | Remanenzmagnet |
| 12 | Dämpferkammer | 46 | Permanentmagnet |
| 13 | Drosselventil | 47 | Absenkstellung |
| 14 | Kolbenstange | 48 | Breite |
| 15 | Kolben, Pumpkolben | 49 | Abstand |
| 16 | erste Kammer | 50 | Federeinrichtung |
| 17 | zweite Kammer | 51 | Gabelkrone |
| 18 | Rückströmkanal | 52 | Verbindungsbügel |
| 19 | Verbindungskanal | 53 | Ausfallende |
| 20 | Einwegkreislauf | 54 | Ausfallende |
| 21 | erstes Einwegventil | 55 | Kanal |
| 22 | zweites Einwegventil | 56 | Wandung |
| 23 | Umlaufrichtung | 57 | Fächer |
| 24 | Ausgleichskammer | 58 | Isoliermaterial |
| 25 | Ausgleichsvolumen | 59 | Kern |
| 26 | erstes Rückschlagventil | 60 | Ring |
| 27 | zweites Rückschlagventil | 61 | Feldlinie |
| 28 | Ausgleichskanal | 62 | Ventil |
| 29 | zweiter Ausgleichskanal | 63 | Ventil |
| 30 | Felderzeugungseinrichtung | 64 | Detektor |
| 31 | Dämpfungskanal | 65 | Maßeinrichtung |
| 32 | Steuereinrichtung | | |
| 33 | Sensoreinrichtung | | |
| 34 | Richtung | | |

## Patentansprüche

1. Federgabel (1) für ein Fahrrad mit einem Steuerrohr (2) und wenigstens einem damit verbundenen Rohrsystem (3, 4), welches ein Standrohr (5, 6) und ein relativ dazu bewegliches Tauchrohr (7, 8) umfasst, wobei ein Radaufnahmeraum (9) neben dem Rohrsystem (3, 4) vorgesehen ist,
wobei innerhalb des Rohrsystems (3, 4) eine Dämpfereinrichtung (10) mit einem Dämpfungsmedium (11) vorgesehen ist, wobei die Dämpfereinrichtung (10) über eine Dämpferkammer (12) und ein Drosselventil (13) verfügt, wobei die Dämpferkammer (12) durch einen beweglichen und mit einer Kolbenstange (14) verbundenen Kolben (15) in eine erste Kammer (16) und in eine zweite Kammer (17) geteilt ist, und wobei die erste Kammer (16) über einen Rückströmkanal (18), das Drosselventil (13) und einen Verbindungskanal (19) mit der zweiten Kammer (17) verbunden ist, wobei das Dämpfungsmedium (11) ein magnetorheologisches Fluid (9) umfasst und wobei das Drosselventil (13) einstellbar ist, und wobei weinigstens eine Felderzeugungseinrichtung (30) zur Erzeugung eines Magnetfeldes in einem Dämpfungskanal (31) des Drosselventils (13) vorgesehen ist, wobei für das Dämpfungsmedium (11) im Wesentlichen ein Einwegkreislauf (20) vorgesehen ist, in welchem wenigstens zwei Einwegventile (21, 22) vorgesehen sind, sodass sowohl beim Eintauchen der Kolbenstange (14) in die Dämpferkammer (12) hinein als auch beim Ausfahren der Kolbenstange (14) aus der Dämpferkammer (12) heraus das Dämpfungsmedium (11) in der gleichen Umlaufrichtung (23) umströmt, wobei ein erstes der Einwegventile (21) an dem Kolben (15) angeordnet ist, welches eine Strömung des Dämpfungsmediums (11) von der zweiten Kammer (17) in die erste Kammer (16) erlaubt,
und dass an dem Verbindungskanal (19) ein zweites Einwegventil (22) angeordnet ist, welches eine Strömung des Dämpfungsmediums (11) von dem Verbindungskanal (19) in die zweite Kammer (17) erlaubt, sodass sowohl das Eintauchen der Kolbenstange (14) in die Dämpferkammer (12) hinein als auch das Ausfahren der Kolbenstange (14) aus der Dämpferkammer (12) heraus mit dem einstellbaren Drosselventil (13) gezielt steuerbar ist, wobei eine Einsatzeinrichtung (38) zwischen dem Rohrsystem (3) und der Dämpferkammer (12) vorgesehen ist, wobei der Rückströmkanal (18) wenigstens abschnittsweise an der Einsatzeinrichtung (38) vorgesehen ist und vorzugsweise den Strömungsquerschnitt (39) des Rückströmkanals (18) begrenzt, **dadurch gekennzeichnet, dass** eine mittlere Dichte der Einsatzeinrichtung (38) zwischen dem Rohrsystem (3, 4) kleiner als eine mittlere Dichte des Dämpfungsmediums (11) ist.

2. Federgabel nach Anspruch 1, wobei eine Ausgleichskammer (24) mit einem vorgespannten Ausgleichsvolumen (25) vorgesehen ist, wobei das Ausgleichsvolumen (25) mit dem Drosselventil (13) und der zweiten Kammer (17) verbunden ist.

3. Federgabel nach dem vorhergehenden Anspruch, wobei das Drosselventil (13) über ein erstes Rückschlagventil (26) mit der Ausgleichskammer (24) verbunden ist, welches nur eine Strömung des Dämpfungsmediums (11) von dem Drosselventil (13) in die Ausgleichskammer (24) erlaubt.

4. Federgabel nach einem der beiden vorhergehenden Ansprüche, wobei die Ausgleichskammer (24) über ein zweites Rückschlagventil (27) mit der zweiten Kammer (17) verbunden ist, welches nur eine Strömung des Dämpfungsmediums (11) von der Ausgleichskammer (24) in die zweite Kammer (17) erlaubt.

5. Federgabel nach einem der beiden vorhergehenden Ansprüche, wobei wenigstens ein Rückschlagventil (26, 27) einstellbar ist, um einen einstellbaren Strömungswiderstand in der Druckstufe und/oder der Zugstufe zu ermöglichen.

6. Federgabel nach einem der vorhergehenden Ansprüche, wobei ein Verhältnis des Außendurchmessers der Kolbenstange zu dem Außendurchmesser des Kolbens (14) zwischen 0,2 und 0,4 beträgt, und/oder wobei ein Verhältnis des Außendurchmessers der Kolbenstange zu dem Außendurchmesser des Kolbens (14) an ein vorgegebenes Verhältnis einer Grunddämpfung in der Druckstufe und einer Grunddämpfung in der Zugstufe angepasst ist.

7. Federgabel nach dem vorhergehenden Anspruch, umfassend wenigstens eine Steuereinrichtung (32) und eine Sensoreinrichtung (33), wobei die Sensoreinrichtung (33) dazu vorgesehen ist, ein Maß für eine Relativgeschwindigkeit zu erfassen und insbesondere für eine Relativgeschwindigkeit des Kolbens (15) zu der Dämpferkammer (12) zu erfassen und/oder wobei die Sensoreinrichtung (33) dazu vorgesehen ist, eine Richtung (34, 35) der Relativbewegung zwischen dem Kolben (15) und der Dämpferkammer (12) zu erfassen und/oder wobei die Sensoreinrichtung (33) dazu vorgesehen ist, ein Maß für einen Federweg (36) zu erfassen.

8. Federgabel nach einem der vorhergehenden Ansprüche, wobei wenigstens eine Endlagendämpfung (37) vorgesehen ist.

9. Federgabel nach einem der vorhergehenden Ansprüche, wobei im bestimmungsgemäßen Gebrauch die erste Kammer (16) unterhalb der zweiten Kammer (17) und das Drosselventil (13) oberhalb der Dämpferkammer (12) angeordnet ist.

10. Federgabel nach dem vorhergehenden Anspruch, wobei die Ausgleichskammer (24) oberhalb des Drosselventils (13) vorgesehen ist.

11. Federgabel nach einem der vorhergehenden Ansprüche, wobei ein größter Durchmesser (40) eines Strömungsquerschnittes (39) des Rückströmkanals (18) an der Einsatzeinrichtung (38) kleiner als ein Durchmesser (41) und insbesondere kleiner als ein Radius des Rohrsystems (3) ist.

12. Federgabel nach einem der vorhergehenden Ansprüche, wobei ein weiteres Drosselventil als Absenkventil (42) mit einer weiteren Felderzeugungseinrichtung (43) vorgesehen ist und wobei das Absenkventil (42) insbesondere in Reihe zu dem Drosselventil (13) geschaltet ist.

13. Federgabel nach dem vorhergehenden Anspruch, wobei die weitere Felderzeugungseinrichtung (43) eine elektrische Spule (44) und/oder einen Remanenzmagneten (45) und/oder wenigstens einen insbesondere zwischen wenigstens einer Normalstellung und wenigstens einer Absenkstellung (47) beweglichen Permanentmagneten (46) umfasst.

## Claims

1. Suspension fork (1) for a bicycle having a head tube (2) and at least one tube system (3, 4) connected therewith which comprises an inner tube (5, 6) and an outer tube (7, 8) movable relative thereto wherein a wheel receiving space (9) is provided adjacent to the tube system (3, 4),
wherein within the tube system (3, 4) a damper device (10) with a damping medium (11) is provided wherein the damper device (10) is provided with a damper chamber (12) and a throttle valve (13) wherein the damper chamber (12) is partitioned to form a first chamber (16) and a second chamber (17) by way of a piston (15) that is movable and connected with a piston rod (14), and wherein the first chamber (16) is connected with the second chamber (17) via a return duct (18), the throttle valve (13), and a transfer duct (19), wherein the damping medium (11) comprises a magnetorheological fluid (9) and wherein the throttle valve (13) is adjustable, and wherein at least one field generating device (30) is provided for generating a magnetic field in a damping duct (31) of the throttle valve (13),
wherein a one-way circuit (20) is substantially provided for the damping medium (11) in which circuit at least two one-way valves (21, 22) are provided such that both when the piston rod (14) plunges into the damper chamber (12) and when the piston rod (14) retracts out of the damper chamber (12) the damping medium (11) flows in the same direction of circulation (23) wherein a first of the one-way valves (21) is disposed at the piston (15), allowing a flow of the damping medium (11) from the second chamber (17) into the first chamber (16),
and that at the transfer duct (19) a second one-way valve (22) is disposed allowing a flow of the damping medium (11) from the transfer duct (19) into the second chamber (17) such that both the plunge of the piston rod (14) into the damper chamber (12) and the retraction of the piston rod (14) out of the damper chamber (12) can be selectively controlled by means of the adjustable throttle valve (13),
wherein an insert device (38) is provided between the tube system (3) and the damper chamber (12), wherein at least portions of the return duct (18) are provided at the insert device (38) and preferably define the flow cross-section (39) of the return duct (18),
**characterized in that** a mean density of the insert device (38) between the tube system (3, 4) is lower than a mean density of the damping medium (11).

2. The suspension fork according to claim 1 wherein an equalizing chamber (24) with an upstream equalizing volume (25) is provided wherein the equalizing volume (25) is connected with the throttle valve (13) and the second chamber (17).

3. The suspension fork according to the preceding claim wherein the throttle valve (13) is connected with the equalizing chamber (24) via a first check valve (26) which only allows flow of the damping medium (11) from the throttle valve (13) into the equalizing chamber (24).

4. The suspension fork according to any of the two preceding claims wherein the equalizing chamber (24) is connected with the second chamber (17) via a second check valve (27) which only allows flow of the damping medium (11) from the equalizing chamber (24) into the second chamber (17).

5. The suspension fork according to any of the two preceding claims wherein at least one check valve (26, 27) is adjustable to allow an adjustable flow resistance in the compression stage and/or the rebound stage.

6. The suspension fork according to any of the preceding claims wherein a relationship of the outer diameter of the piston rod to the outer diameter of the piston (14) lies between 0.2 and 0.4, and/or wherein a relationship of the outer diameter of the piston rod to the outer diameter of the piston (14) is adapted to a specified relationship of a basic damping in the compression stage and a basic damping in the rebound stage.

7. The suspension fork according to the preceding claim comprising at least one control device (32) and a sensor device (33), wherein the sensor device (33) is provided for capturing a rate for a relative speed and in particular for a relative speed of the piston (15) to the damper chamber (12) and/or wherein the sensor device (33) is provided for capturing a direction (34, 35) of the relative motion between the piston (15) and the damper chamber (12) and/or wherein the sensor device (33) is provided for capturing a measure for a suspension travel (36).

8. The suspension fork according to any of the preceding claims wherein at least one end position damping (37) is provided.

9. The suspension fork according to any of the preceding claims wherein in use as intended the first chamber (16) is disposed beneath the second chamber (17) and the throttle valve (13), above the damper chamber (12).

10. The suspension fork according to the preceding claim wherein the equalizing chamber (24) is provided above the throttle valve (13).

11. The suspension fork according to any of the preceding claims wherein a largest diameter (40) of a flow cross-section (39) of the return duct (18) at the insert device (38) is smaller than a diameter (41) and in particular smaller than a radius of the tube system (3).

12. The suspension fork according to any of the preceding claims wherein a further throttle valve is provided as the lowering valve (42) with a further field generating device (43) and wherein the lowering valve (42) is in particular connected in series with the throttle valve (13).

13. The suspension fork according to the preceding claim wherein the further field generating device (43) comprises an electric coil (44) and/or a remanence magnet (45) and/or at least one permanent magnet (46) that is in particular movable between at least one normal position and at least one lowered position (47).

## Revendications

1. Fourche de suspension (1) pour une bicyclette dotée d'un tube de direction (2) et d'au moins un système de tubes (3, 4) relié à celui-ci, lequel comprend un tube montant (5, 6) et un tube plongeur (7, 8) mobile par rapport audit tube montant (5, 6), un espace de logement de roue (9) étant prévu à côté du système de tubes (3, 4),
un dispositif d'amortissement (10) doté d'un agent d'amortissement (11) étant prévu au sein du système de tubes (3, 4), ledit dispositif d'amortissement (10) disposant d'une chambre d'amortissement (12) et d'une vanne d'étranglement (13), la chambre d'amortissement (12) étant divisée en une première chambre (16) et en une deuxième chambre (17) par un piston (15) mobile et relié à une tige de piston (14), et la première chambre (16) étant reliée à la deuxième chambre (17) par le biais d'un canal de reflux (18), la vanne d'étranglement (13) et un canal de liaison (19), l'agent d'amortissement (11) comprenant un fluide magnéto-rhéologique (9) et la vanne d'étranglement (13) étant réglable, et au moins un dispositif de génération de champ (30) étant prévu pour générer un champ magnétique dans un canal d'amortissement (31) de la vanne d'étranglement (13), un circuit à sens unique (20) étant sensiblement prévu pour l'agent d'amortissement (11) dans lequel sont prévues au moins deux vannes anti-retour (21, 22) de telle sorte que, aussi bien lorsque la tige de piston (14) plonge dans la chambre d'amortissement (12) que lorsque la tige de piston (14) ressort de la chambre d'amortissement (12), l'agent d'amortissement (11) circule dans le même sens (23), une première des vannes anti-retour (21) étant agencée sur le piston (15), ladite première vanne autorisant un courant de l'agent d'amortissement (11) passant de la deuxième chambre (17) à la première chambre (16),
et une deuxième vanne anti-retour (22) étant agencée sur le canal de liaison (19), ladite vanne anti-retour (22) autorisant un courant de l'agent d'amortissement (11) allant du canal de liaison (19) dans la deuxième chambre (17) de telle sorte qu'aussi bien le fait que la tige de piston (14) plonge dans la chambre d'amortissement (12) que celui que la tige de piston (14) ressorte de la chambre d'amortissement (12) peuvent être commandés de manière ciblée par la vanne d'étranglement (13) réglable,
un dispositif de joint (38) entre le système de tubes (3) et la chambre d'amortissement (12) étant prévu, le canal de reflux (18) étant prévu au moyen partiellement sur le dispositif de joint (38) et limitant de préférence la section de passage (39) du canal de reflux (18),
**caractérisée en ce,**
**qu'**une densité moyenne du dispositif de joint (38) entre le système de tubes (3, 4) est inférieure à une densité moyenne de l'agent d'amortissement (11).

2. Fourche de suspension selon la revendication 1, une chambre d'équilibrage (24) étant prévue avec un volume d'équilibrage (25) de précontrainte, ledit volume d'équilibrage (25) étant relié à la vanne d'étranglement (13) et à la deuxième chambre (17).

3. Fourche de suspension selon la revendication précédente, la vanne d'étranglement (13) étant reliée à la chambre d'équilibrage (24) par un premier clapet de refoulement (26) qui n'autorise qu'un courant de l'agent d'amortissement (11) allant de la vanne d'étranglement (13) à la chambre d'équilibrage (24).

4. Fourche de suspension selon l'une quelconque des deux revendications précédentes, la chambre d'équilibrage (24) étant reliée à la deuxième chambre (17) par un deuxième clapet de refoulement (27) qui n'autorise qu'un courant de l'agent d'amortissement (11) allant de la chambre d'équilibrage (24) à la deuxième chambre (17).

5. Fourche de suspension selon l'une quelconque des deux revendications précédentes, au moins un clapet de refoulement (26, 27) étant réglable pour permettre une résistance de courant réglable dans l'action de compression et/ou dans l'action d'extension.

6. Fourche de suspension selon l'une quelconque des revendications précédentes, un rapport entre le diamètre extérieur de la tige de piston et le diamètre extérieur du piston (14) étant de 0,2 à 0,4 et/ou un rapport entre le diamètre extérieur de la tige de piston et le diamètre extérieur du piston (14) étant adapté à un rapport prédéfini d'un amortissement de base dans l'action de compression et d'un amortissement de base dans l'action d'extension.

7. Fourche de suspension selon la revendication précédente, comprenant au moins un dispositif de commande (32) et un dispositif capteur (33), ledit dispositif capteur (33) étant prévu pour détecter une mesure de vitesse relative et pour détecter notamment une mesure d'une vitesse relative du piston (15) par rapport à la chambre d'amortissement (12) et/ou le dispositif capteur (33) étant prévu pour détecter un sens (34, 35) du mouvement relatif du piston (15) par rapport à la chambre d'amortissement (12) et/ou le dispositif capteur (33) étant prévu pour détecter une mesure d'un débattement (36).

8. Fourche de suspension selon l'une quelconque des revendications précédentes, au moins un amortissement de fin de course (37) étant prévu.

9. Fourche de suspension selon l'une quelconque des revendications précédentes, la première chambre (16) étant, dans une application conforme, agencée en dessous de la deuxième chambre (17) et la vanne d'étranglement (13), elle, au-dessus de la chambre d'amortisseur (12)

10. Fourche de suspension selon la revendication précédente, la chambre d'équilibrage (24) étant prévue au-dessus de la vanne d'étranglement (13).

11. Fourche de suspension selon l'une quelconque des revendications précédentes, un diamètre maximal (40) d'une section de passage (39) du canal de reflux (18) au dispositif de joint (38) étant inférieur à un diamètre (41) et notamment inférieur à un rayon du système de tubes (3).

12. Fourche de suspension selon l'une quelconque des revendications précédentes, une autre vanne d'étranglement étant prévue en tant que vanne de descente (42) dotée d'un autre dispositif de génération de champ (43), et la vanne de descente (42) étant notamment connectée en série avec la vanne d'étranglement (13).

13. Fourche de suspension selon la revendication précédente, l'autre dispositif de génération de champ (43) comprenant une bobine électrique (44) et/ou un aimant rémanent (45) et/ou au moins un aimant permanent (46) déplaçable notamment entre une position normale et au moins une position de descente (47).
